# EUROPEAN PATENT APPLICATION

(11) **EP 4 660 159 A2**
(43) Date of publication of application: **10.12.2025**
(21) Application number: 25203022.6
(22) Date of filing: 14.11.2022
(51) Int. Cl.: C03B 33/033

(54) **SYSTEM FOR BREAKING AND/OR SEPARATING LAMINATED GLASS PLATES**

(62) Divisional of application: 22383097.7
(71) Applicant: Tur & Development SL, 44415 Teruel (ES)
(72) Inventor: Tomás Martin, Miguel, 44415 Teruel (ES)
(74) Representative: Nederlandsch Octrooibureau

(57) **Abstract**

A separating system for separating laminated glass plates comprising a heating device, generating force means, first pulling element and second pulling element wherein the first pulling element is arranged facing the second pulling element and the generating force means are arranged to generate a separating force and a structure supporting the heating device (306) is arranged to transmit the separating force between the first and the second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces.

## Description

### SUBJECT MATTER OF THE INVENTION

The present invention relates to a breaking system for a glass processing table to break a laminated glass panel. The present invention also relates to a separating system for a glass processing table to separate a laminated glass panel. The invention further relates to a method to break a laminated glass panel in a glass processing table and to a method to separate a laminated glass panel in a glass processing table.

### BACKGROUND OF THE INVENTION

Laminated glass panels comprise an upper glass sheet and a lower glass sheet arranged extending one above the other and connected by a central plastic film or sheet that extends between the upper and the lower glass sheet keeping them together. The central plastic film or sheet may be, for instance, a polyvinyl plastic film.

Glass processing tables for laminated glass panels comprising an upper processing bridge and a lower processing bridge located one above the other are well known. These known glass processing tables usually comprise two processing heads, one on the upper processing bridge and the other on the lower processing bridge wherein each processing tool may comprise tools for scoring and breaking the glass plate and cutting the plastic film.

Also known is the use in such glass processing tables of cutting and separating systems that allow the laminated glass panel to be broken after being scratched by the scoring tools and the resulting pieces to be separated so that the polyvinyl plastic film inside can be cut.

In this way, once the laminated glass panel has been scratched, and by means of the mechanical breaking system, the lower and upper glass sheets are completely broken following the previous scratching. Once broken, separation forces are exerted on each piece resulting from the cutting while heat is applied to the entire length of the cut, so that as the inner polyvinyl sheet is heated and softened, the two pieces are separated, generating a sufficient separation to be able to introduce a blade in this separation and cut the inner polyvinyl sheet. However, the cutting process of these machines is slow and inefficient, as the two processes, cutting the inner polyvinyl sheet and separating, cannot be performed simultaneously. To exert the necessary force to break the upper glass sheet, a bar is used under the laminated glass panel along the entire length of the cutting line that occupies the same position as needed by the element that heats the inner polyvinyl sheet. For this reason it is necessary to have a mechanism that moves the breaking bar and another mechanism that when the breaking bar has been removed moves the heat emitter device into the position previously occupied by the breaking device.

Another aspect to consider is the complex system that is used to exert the traction forces to achieve the separation between pieces. Long structures running from side to side of the machine are required to hold the glass and pull it.

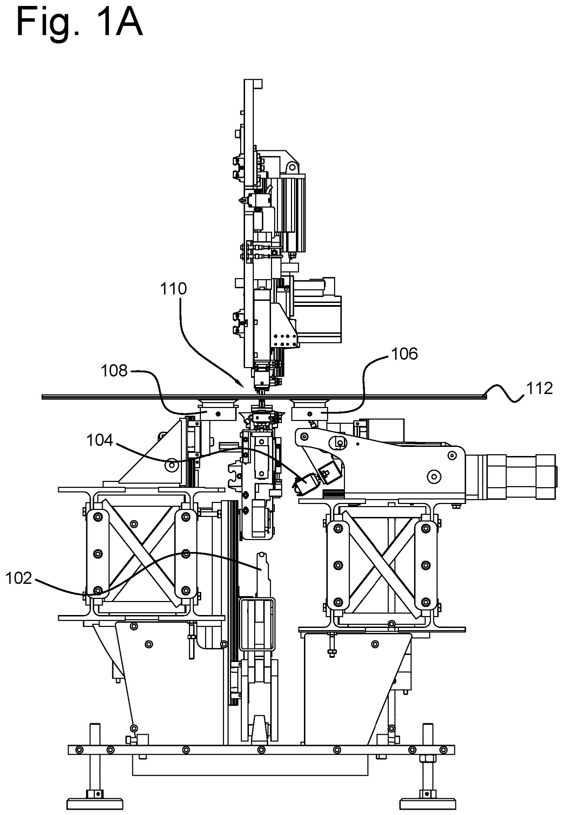

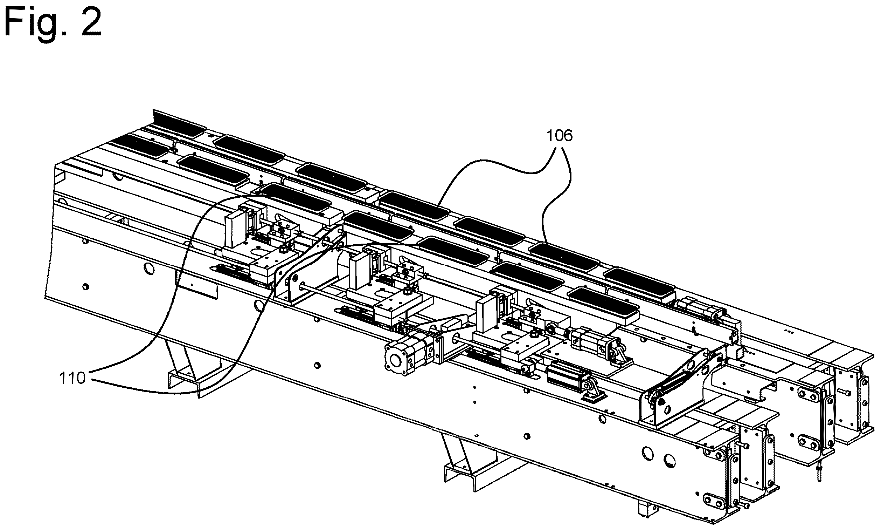

Figs. 1A-1F illustrate an example of a breaking and separating system according to the prior art. Fig. 2 shows a detailed view of part of the separating system shown in Figs. 1A-F.

Figs. 1A-D shows a glass processing table wherein a laminated glass panel 112 is being processed. The breaking system of Figs. 1A-D comprises a lower bridge that spans the glass processing table in a direction Y and comprises a breaking bar to apply a force to the cutting line and break out the opposite glass layer to the breaking bar. The breaking bar has to be placed in front of the cutting line, in the same position than the heating device.

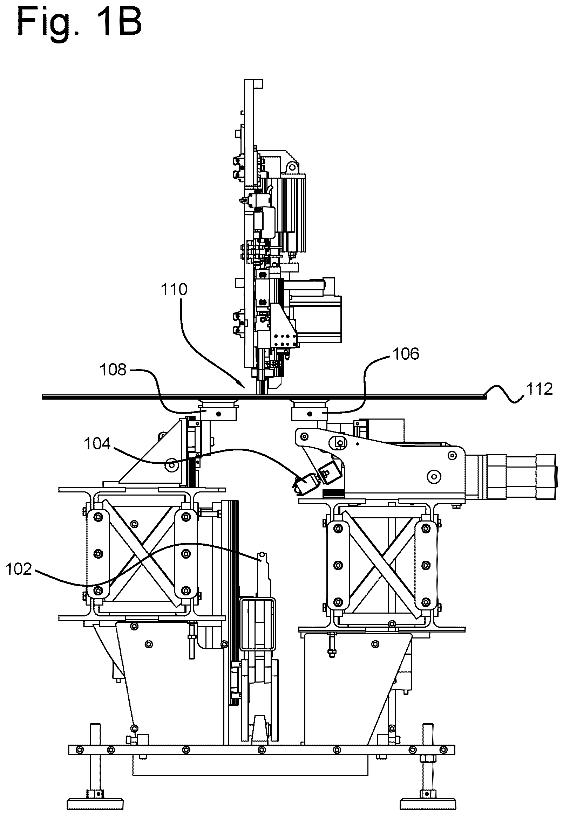

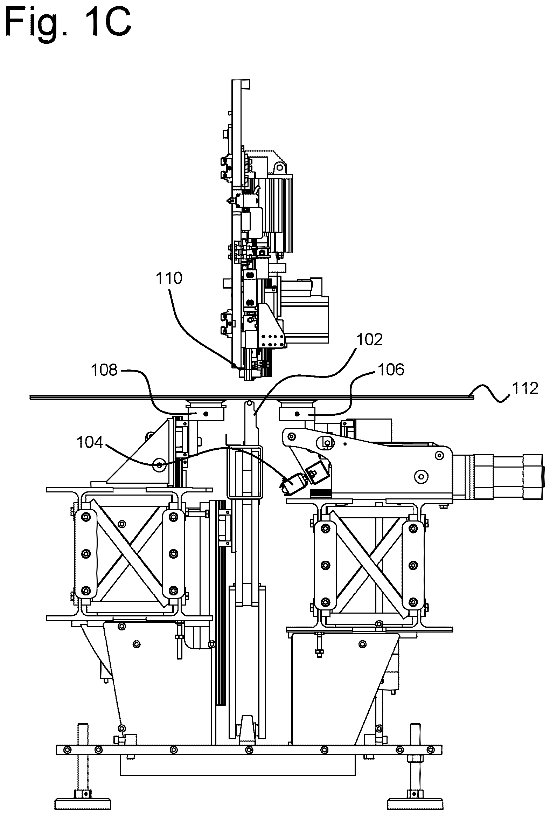

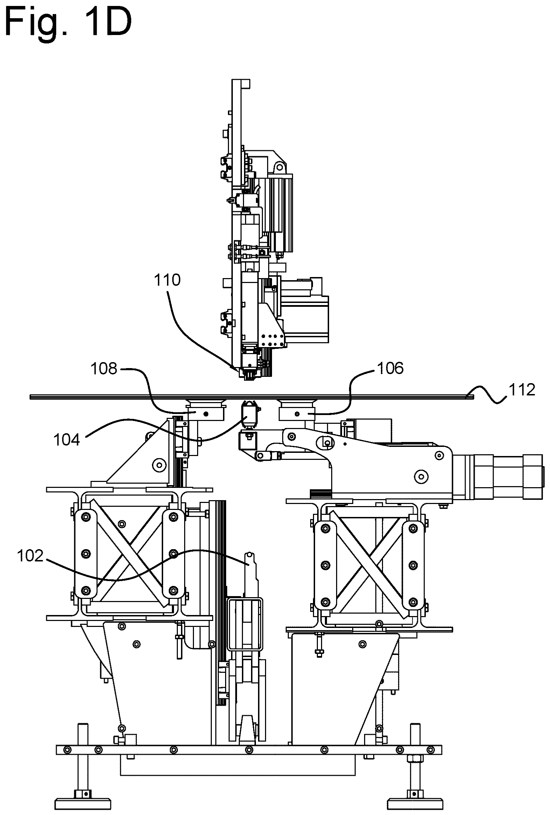

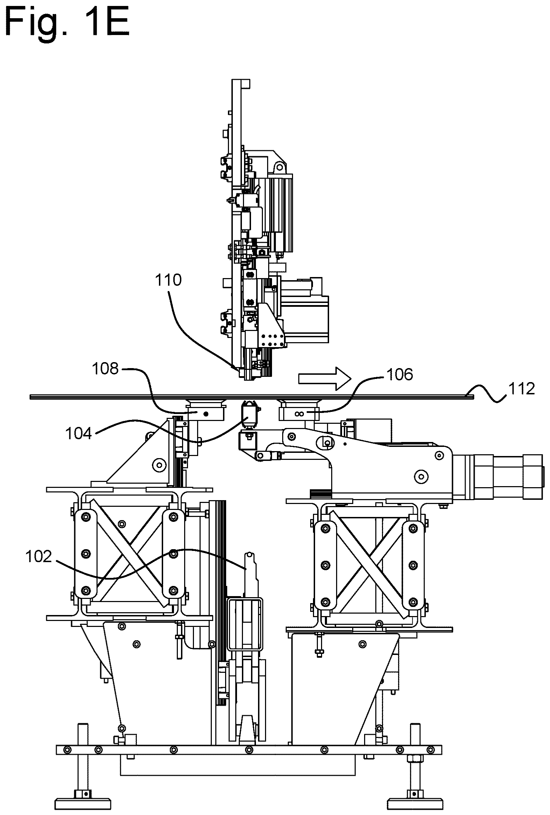

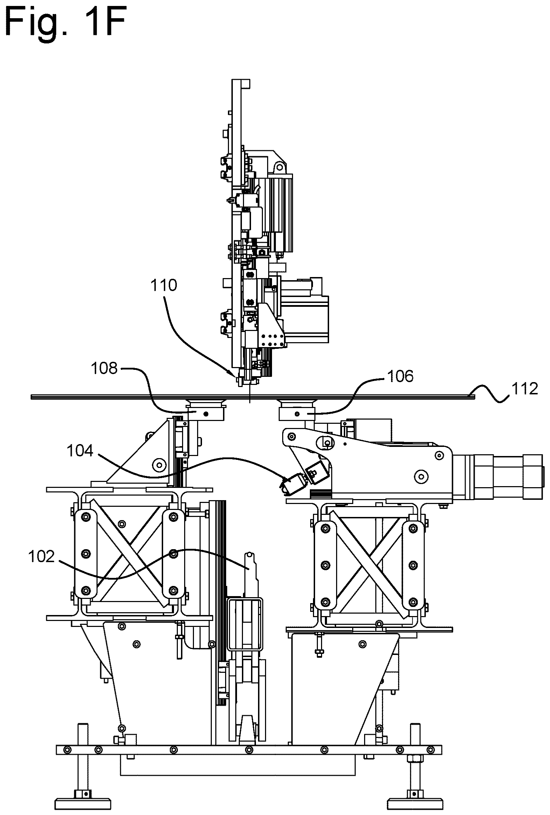

The glass processing table shown in Figs. 1A-D comprises an upper processing tool 110, a lower breaking tool 102, a heating device 104, and a separating system comprising first suction cups 108 and second suction cups 106. A process of breaking and separating a laminated glass panel according to the prior art will be now explained in relation to Figs. 1A-1D. In Fig. 1A, the upper processing tool 110 first scratches or scores a cutting line along the upper glass sheet of the laminated glass panel 112 while a lower processing tool scratches or scores the cutting line along the lower glass sheet of the laminated glass panel 112. In Fig. 1B, after the cutting line has been scored, the upper processing tool 110 breaks the lower glass sheet by exerting force on the upper glass sheet along the cutting line. During this process, the first suction cups 108 and the second suction cups 106 are attached to the lower glass sheet. After that, Fig. 1C shows how the lower breaking tool 102 has moved closer to the lower glass sheet and breaks the upper glass sheet by exerting force on the lower glass sheet along the cutting line. Then in Fig. 1D, the lower breaking tool 102 has moved away from the lower glass sheet to let space for the heating device 104 to move close to the lower glass sheet to heat the plastic film between the lower glass sheet and the upper glass sheet. Fig. 1E shows how the separating system moves the second suction cups 106 in the direction of the arrow while the heating device 104 continues to heat the plastic film. In this way, a space is created along the cutting line such that, as shown in Fig. 1F, the upper processing tool 110 can introduce a cutting tool in the space to cut the plastic film sheet thereby allowing that the laminated glass panel 112 is separated into two pieces along the cutting line.

Fig. 2 shows a detailed view of part of the separating system shown in Figs. 1A-F comprising a first suction cups 108 and the second suction cups 106 are attached to the lower glass sheet. The separating system of Fig.2 comprises a lower bridge that spans the glass processing table in a direction Y and comprises a stretch bar each side to the cutting line and a heating element to heat the butyral or plastic film sheet. Each stretch bar comprises a plurality of vacuum or suction cups to adhere to the laminated glass plate and apply force in a opposite direction in order to separate the pieces. The heating device is activated to heat the plastic film of the laminated glass panel while the separating forces are applied.

As it can be seen in Fig. 2, the system and structure related to the second suction cups 108, which are the ones that pull from the laminated glass panel as indicated by the arrow in Fig. 1E, comprises long and complex physical structures such that the forces required to pull from the laminated glass panel in order to separate it can be generated and exerted by the second suction cups 108. This is due to the fact that the glass processing table structure in the center part of the table is weak as space for the lower breaking tool 102, the heating device 104, etc needs to be reserved there.

The cutting and separating process and machine according to the prior art as explained with relation to Figs. 1A-E and Fig. 2 have several disadvantages. First, it is necessary to have a mechanism that moves the lower breaking tool 102 and another mechanism that when the lower breaking tool 102 has been removed moves the heating device 104 into the position previously occupied by the lower breaking tool 102. This system is complicated and slow.

Another disadvantage is the complex system that is used to exert the traction forces to achieve the separation between pieces. Long structures running from side to side of the machine are required to hold the laminated glass panel and pull it, as shown in Fig. 2.

### DECRIPTION OF THE INVENTION

The invention relates to a breaking system for breaking a laminated glass plate, wherein the breaking system comprises first exertion force means and second exertion force means wherein the first exertion force means are configured to apply a first force on a first location of a surface of the laminated glass plate and the second exertion force means are configured to apply a second force on a second location of the surface of the laminated glass plate wherein the first location is at a first distance from a cutting line on the surface of the laminated glass plate and the second location is at a second distance from the cutting line, wherein the first location is on one side of the cutting line and the second location is on the other side of the cutting line, wherein the first distance and the second distance are such to allow placing a heating device between the first and the second exertion force means, and wherein the breaking system is configured such that a third and a fourth forces are exerted on the laminated glass at the same time and with opposite direction than the first and the second forces, wherein the third force is exerted on the one side at a third distance from the cutting line larger than the first distance, and the fourth force is exerted on the other side at a fourth distance from the cutting line larger than the second distance and the first, second, third and fourth forces are such to cause the laminated glass plate to curve thereby forcing the laminated glass to break through the cutting line.

The first exertion force means and/or the second exertion force means may comprise one or more bars. This provides a very efficient way of breaking the laminated glass plate. In an embodiment according to the invention, the first exertion force means may comprise one or more bars wherein the one or more bars may apply the first force on the laminated glass plate. In an alternative embodiment, the second exertion force means may comprise the one or more bars wherein the one or more bars may apply the second force on the laminated glass plate. In a further alternative embodiment, In an embodiment, the first exertion force means may comprise a first group of one or more bars the second exertion force means may comprise a second group of one or more bars wherein the first group of one or more bars may apply the first force on the laminated glass plate and the second group of one or more bars may apply the second force on the laminated glass plate.

The first exertion force means and/or the second exertion force means may comprise one or more suction cups. This also provides a very efficient way of breaking the laminated glass plate. In an embodiment according to the invention, the first exertion force means may comprise one or more suction cups wherein the one or more suction cups may apply the first force on the laminated glass plate. In an alternative embodiment, the second exertion force means may comprise the one or more suction cups wherein the one or more suction cups may apply the second force on the laminated glass plate. In a further alternative embodiment, In an embodiment, the first exertion force means may comprise a first group of one or more suction cups the second exertion force means may comprise a second group of one or more suction cups wherein the first group of one or more suction cups may apply the first force on the laminated glass plate and the second group of one or more suction cups may apply the second force on the laminated glass plate. The breaking line is defined by the line scored on the surface of the laminated glass plate. The first distance is defined by the shortest distance from the location at which the first exertion means applies the first force and the breaking line. The second distance is defined by the shortest distance from the location at which the second exertion means applies the second force and the breaking line. The third distance is defined by the shortest distance from the location at which the third force is applied and the breaking line. The fourth distance is defined by the shortest distance from the location at which the fourth force is applied and the breaking line.

In a further embodiment, the first exertion force means may comprise one or more bars and the second exertion force means may comprise one or more suction cups wherein the first group of one or more bars may apply the first force on the laminated glass plate and the one or more suction cups may apply the second force on the laminated glass plate, or vice versa.

The one or more suction cups may be configured to move from an initial position to an inclined position such that the first exertion force means apply the first and the third forces on the laminated glass plate and/or the second exertion force means apply the second and the fourth forces on the laminated glass plate. This provides a very compact breaking system wherein the same device that generates the third and fourth forces to hold the laminated glass plate also generate the first and second forces to break the laminated glass plane.

The first distance may be substantially equal to the second distance. This allows the laminated glass panel to break at the cutting line.

The heating device may be configured to move from a first position to a second position wherein, wherein, when the heating device is at the second position, the heating device is closer to the laminated glass plate than when the heating device is at the first position and wherein the movement of the heating device from the first position to the second position produces the first and second forces. This provides a very efficient way of simultaneously breaking the laminated glass panel and heating the plastic film.

The invention further relates to a separating system for separating laminated glass plates comprising a heating device, generating force means, first pulling element and second pulling element wherein the first pulling element is arranged facing the second pulling element and the generating force means are arranged to generate a separating force and a structure supporting the heating device is arranged to transmit the separating force between the first and the second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces.

The structure supporting the heating device may be arranged to contact the first and/or the second pulling elements to transmit the separating force such that the first and second pulling elements can exert the first and second pulling forces at the same time as the heating device heats a film of the laminated glass plate.

The generating force means may comprise a swelling hose arranged to generate the separating force. This is a very efficient way of implementing the generating force means. The swelling hose may be configured to swell from a deflated state to an inflated state and to deflate from the inflated state back to the inflated state. The swelling hose may be located between the structure supporting the heating device and one of the first or second pulling means such that, when inflating, the swelling hose contacts and pushes against both the structure and the first or second pulling means thereby transmitting the separating force that the generating force means exerts on the structure.

The structure supporting the heating device may be arranged to contact the first and/or the second pulling elements such that the laminated glass plate can be separated a distance which is less than a predetermined distance.

The heating device may be configured to move from a first position to a second position wherein, when the heating device is at the second position, the heating device is closer to the laminated glass plate than when the heating device is at the first position, and wherein the movement of the heating device from the first position to the second position causes the first and second pulling elements to move towards and grip the laminated glass plate and the movement of the heating device from the second position to the first position causes the first and second pulling elements to move away from and release the laminated glass plate.

The invention further relates to a system for cutting and separating pieces of laminated glass comprising a breaking system and a separating system further comprising suction cups used by the first and the second pulling elements to pull the laminated glass plate for separation and also used by the breaking system to generate any of the first, second third and fourth forces to break the glass.

The invention relates as well to a table for processing laminated glass plates comprising the breaking system and/or the separating system.

The invention relates further to a method for breaking a laminated glass plate, the method comprising scoring a cutting line on the laminated glass plate; and applying, by first exertion force means, a first force on a first location of a surface of the laminated glass plate, a second force, by second exertion force means, on a second location of the surface of the laminated glass plate, and a third and a fourth forces with opposite direction than the first and the second forces, wherein the first, second, third and fourth forces are such to cause the laminated glass plate to curve thereby forcing the laminated glass to break through the cutting line; and heating, by a heating device and while applying the first, second, third and fourth forces, a film of the laminated glass plate; wherein the first location is at a first distance from the cutting line on the surface of the laminated glass plate, the second location is at a second distance from the cutting line, the first location is on one side of the cutting line, the second location is on the other side of the cutting line, the first distance and the second distance are such to allow placing the heating device between the first and the second exertion force means, the third force is exerted on the one side at a third distance from the cutting line larger than the first distance, and the fourth force is exerted on the other side at a fourth distance from the cutting line larger than the second distance.

The invention relates further to a method for separating a glass laminated plate, the method comprising generating, by generating force means, a separating force that a structure supporting a heating device is arranged to transmit to a first and second pulling elements such that the first and the second pulling elements can exert a first pulling and a second pulling force respectively at each side of a cutting line of a laminated glass plate such that the laminated glass plate can be separated through the cutting line into two pieces, wherein the first pulling element is arranged facing the second pulling element. As the structure that supports the heating device transmits the separating force to the first and pulling elements, the first and second elements can be simplified as they do not need to generate said separating force to pull from the laminated glass plate to separate the laminated glass plate into two pieces. This provides a more efficient and cheaper manufacturing process for the first and second pulling elements.

The invention relates to a glass processing table for processing glass plates, wherein the laminated glass plate processing table comprises a top surface for supporting a laminated glass plate in a horizontal or substantially vertical position, a processing system for processing the laminated glass plate, wherein the processing system comprises a fixed bridge comprising a system for breaking and/or separating the laminated glass plate, wherein the fixed bridge is arranged under the top surface in a fixed position extending across the table in a Y-direction so as to span a width of the table, and the system for breaking and/or separating the laminated glass plate is mounted on the fixed bridge, wherein the system for breaking and/or separating comprises processing means for breaking the laminated glass plate arranged to exert forces on the pre-scratched laminated glass plate to stress the upper glass sheet on the side opposite the fixed bridge so as to cause the laminated glass plate to break along the cutting line described by the pre-scratch so that the heating device of the plastic film can be positioned to coincide with the pre-scratch or cutting line, and/or means for separating the two parts resulting from the cutting comprising the device for heating the inner plastic film and a mechanical traction system for separating the two parts of the laminated glass plate and allowing the plastic film to be cut, characterised in that the structural part supporting the heating device transmits the force responsible for separating the laminated glass plate between the devices that grip the glass of each of the two resulting parts. This allows the plastic sheet to be heated with the heating device at the same time as the laminated glass plate is forced by applying the necessary forces for breaking so that the processes of separating and breaking can be carried out simultaneously and therefore the process can be faster. It also allows forces to be transmitted between the glass gripping elements for separating by using the structural part that supports the heating device as a contact element between one side and the other along the entire length of the cut (the cutting line), avoiding the use of complex structures capable of withstanding the separating forces.

The fixed bridge extends across the table in the Y-direction, thus dividing the machine into a first zone and a second zone, where the breaking and/or separating system may comprise a first group of suction cups arranged in the first zone extending in the Y-direction and a second group of suction cups arranged in the second zone extending in the Y-direction. This allows the glass to be gripped on both sides and to be pulled.

The breaking system may comprise two force application lines symmetrically positioned with respect to the cutting line which exert force directly on the laminated glass plate or on elements in contact with the laminated glass plate. These elements may be the suction cups of the breaking system itself and/or separately as the same suction cups may be used for both processes, to cause breaking along the cutting line, arranged in such a way that the heating device can be located between the two force lines in a position coinciding with the cutting line. The described lines of force can also be obtained by the action of a torque on the glass gripping elements. The breaking system may also comprise mechanical means to move it closer to and further away from the laminated glass plate so that breaking can take place and the system can leave free space next to the cutting line for other processes such as pre-scratching.

The separating system may comprise mechanical means for exerting a resultant separating force between the glass gripping systems of one and the other part to be separated such that the mechanical means are located in the structure supporting the heating device during separation or exert the force from one side to the other through the structure. The structure supporting the heating device forming part of the separating system may also comprise mechanical means for moving the heating device towards and away from the laminated glass plate so that heating occurs when the heating device is positioned next to the laminated glass plate and so that the system can leave free space next to the cutting line for other processes such as pre-scratching.

The mechanical means that may comprise the breaking system and the heating system may be substantially the same, such that the same structure is used to apply the breaking forces and to bring the heating device close together.

The breaking and/or separating system may further comprise an upper bridge comprising a movable processing head, wherein the upper bridge is arranged on the side opposite to the fixed bridge comprising the system for breaking and/or separating extending across the table in the Y-direction such that it spans a width of the table and the movable processing head is mounted on the upper bridge and arranged to move along the upper bridge, wherein the movable processing head comprises additional processing means for the breaking or separating operations such as a tamper to apply forces on the laminated glass plate or a blade to cut the butyral or plastic film once the separating system has been able to create sufficient separation between the resulting pieces of glass.

The processing means of the cutting system may further comprise suction cups that vary the inclination to facilitate the stress exerted on the laminated glass plate by the breaking forces to be concentrated on the cutting line, thus facilitating breaking.

Both the processing means for gripping the laminated glass plate of the separating system and the means for transmitting the breaking forces can be suction cups, in which case the same suction cups can be used for both functions. This results in a more economical machine because part of the mechanical system is saved.

### BRIEF DESCRIPTION OF THE DRAWINGS

Further characteristics and advantages of the invention will become better apparent from the description of preferred embodiments of systems and devices for removing a plastic film layer and/or a low emission glass panels, illustrated by way of non-limiting example in the accompanying drawings.
Fig. 1A-D show schematic drawings of a glass processing table for laminated glass plates according to the prior art.
Fig. 2 shows a schematic drawing of a prior art separation system of a glass processing table for laminated glass plates.
Figs. 3A-E show a schematic drawing of a glass processing table for laminated glass plates comprising a system to break a glass plate according to an embodiment of the invention.
Fig. 4 shows a schematic drawing of a glass processing table for laminated glass plates comprising a system to break a glass plate according to an alternative embodiment of the invention.
Fig. 5 shows a schematic drawing of a glass processing table for laminated glass plates comprising a system to break and separate a glass plate according to an embodiment of the invention.
Fig. 6 shows a schematic drawing of a glass processing table for laminated glass plates comprising a system to break and separate a laminated glass plate according to an embodiment of the invention.
Fig. 7 shows a schematic drawing of a detailed view of the system to separate a glass plate shown in Fig. 5.
   Fig. 8 shows a flowchart of a method for breaking a laminated glass plate.
   Fig. 9 shows a flowchart of a method for separating a laminated glass plate.

### DESCRIPTION OF THE PREFERRED EMBODIMENTS

The same reference signs are used in the different figures to indicate the same elements.

A laminated glass plate is understood to be the assembly of several sheets of glass of any thickness joined together by means of sheets made of plastic materials. A monolithic glass plate means a single sheet of glass of any thickness.

The processes referred to in this invention are those necessary for cutting (for instance, cutting of a large commercial sheet of glass into smaller formats) of glass plates.

For cutting monolithic glass plates usually it is sufficient to pass a small sharpened hard metal or diamond wheel pressing on the glass plate and this produces a crack on the surface face of the glass plate. The glass plate then simply arches and breaks along the marked line of the crack.

To cut laminated glass plates, the process described for monolithic glass plates must be carried out on both sides of the glass plate (as a laminated glass plate is the composition of two monolithic glass plates joined by a plastic film) and then, it is necessary to cut the plastic film that remains between the two glass plates that form the laminated glass plate. To do this, it is normal to heat the plastic film with a lamp or resistance and then apply a force on both sides of the cut so that the pieces are separated enough to introduce a blade and cut the glass plate.

In addition to the cut itself, the cutting process may also include an operation of removing a transparent metallic film that some glass plates incorporate in their surface to improve their thermal insulation properties. This operation is usually carried out with a grinding wheel or metal brush that polishes a strip (typically 2 centimetres) centred on the line where the cut is to be made. Other operations may also be involved, such as the application of labels, or laser marking.

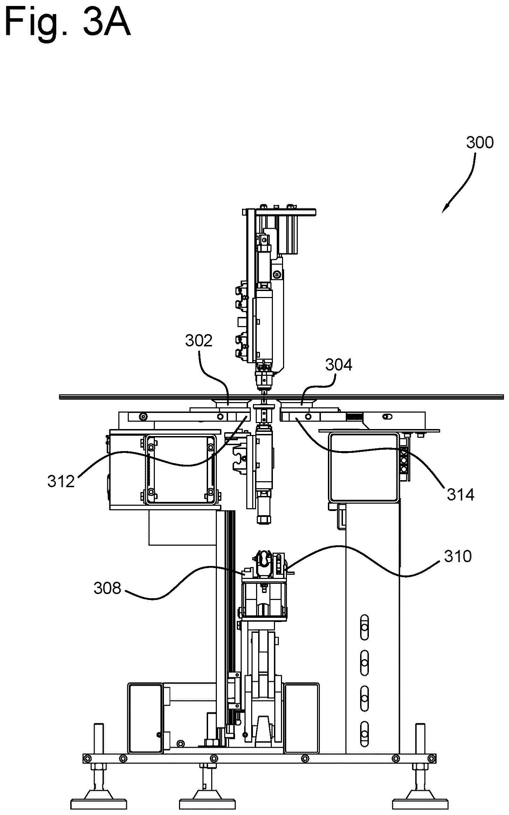

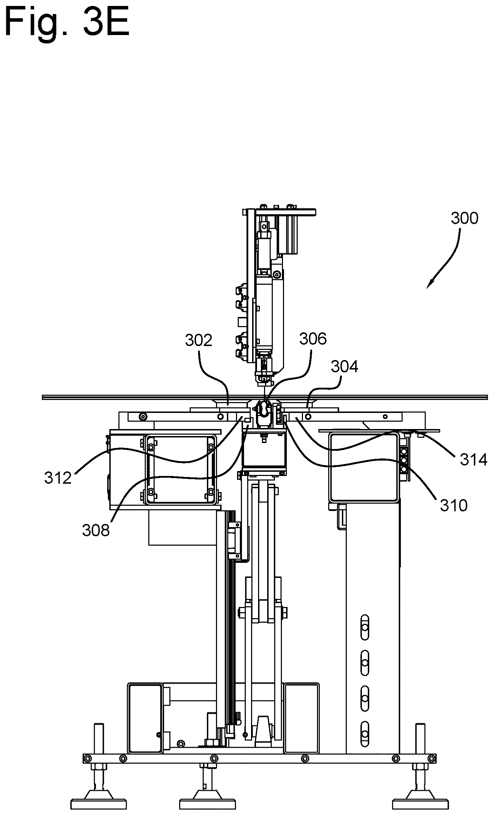

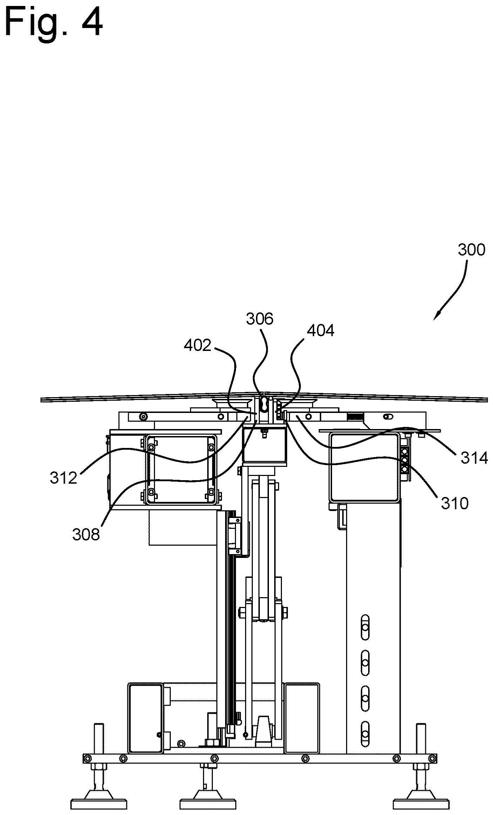

Figs. 3A-E and 4 show a schematic drawing of a glass breaking system comprising suction cups for holding the glass laminated plate while applying force by means of breaking bars or by tilting the suction cups or a combination of both so that the heating lamp or heating device can be positioned on the cutting line at the same time as breaking of the upper glass sheet happens.

The breaking system 300 of Figs. 3A-E and 4 comprises means for exerting forces on the laminated glass plate in the form of torque that stresses the laminated glass plate at the cutting line. The breaking system 300 may comprise bars 402 and 404 in Fig. 4 or suction cups 302 and 304 in Figs. 3A-E on the heating device 306 side such that the force is exerted in lines parallel to the cutting line substantially close to the cutting line. The breaking system 300 may also comprise other exertion force means such as bars for exerting the force in the opposite direction necessary to generate the resulting breaking torque such that the exertion force means for exerting the opposed force in the opposite direction apply the force in lines parallel to the cutting line further away than the first ones. The breaking line is defined by the line scored on the surface of the laminated glass plate. The first distance is defined by the shortest distance from the location at which the first exertion means applies the first force and the breaking line. The second distance is defined by the shortest distance from the location at which the second exertion means applies the second force and the breaking line. The third distance is defined by the shortest distance from the location at which the third force is applied and the breaking line. The fourth distance is defined by the shortest distance from the location at which the fourth force is applied and the breaking line.

In the case of using suction cups as exertion force means, once the suction cups are attached to the laminated glass plate, the suction cups can vary its inclination resulting in the generation of the first and the third forces by the suction cups forming the first exertion force means 302, and a second and fourth forces force by the suction cups forming the second exertion force means 304. The first and second forces are exerted by the edge of the corresponding suction cups that moves toward the laminated glass plate and the second and fourth forces are exerted in the opposite direction that is exerted by the vacuum of the suction cups. These two pairs of forces can be exerted to obtain the torque necessary to achieve the cut-out through the cutting line of the laminated glass plate.

As explained, the breaking system 300 for breaking a laminated glass plate shown in Figs. 3A-D and 4 comprises first exertion force means 302 and second exertion force means 304. The first exertion force means 302 are configured to apply the first force on a first location of the surface of the laminated glass plate and the second exertion force means 304 are configured to apply a second force on a second location of the surface of the laminated glass plate. The first location and the second location are at substantially the same distance from the cutting line. The space separating the first exertion force means 302 and the second exertion force means 304 is large enough to allow placing the heating device 312 between the first 302 and the second exertion force means 304. In this way, the laminated glass plate can be cut faster because the operations of breaking the upper glass sheet of the laminated glass plate and heating the plastic film of the laminated glass plate can be performed at the same time. The first exertion force means 302 and the second exertion force means 304 shown in Figs. 3A-D comprise each one, one or more suction cups that are arranged to produce a vacuum and attached to the lower glass sheet. The first exertion force means and the second exertion force means in Fig. 4 comprise respectively each one, first one or more bars 402 and second one or more bars 404 that are arranged to break the upper glass sheet by hitting it. The first one or more bars 402 exert a first force against the lower glass sheet of the laminated glass plate. The second one or more bars 402 exert a second force against the lower glass sheet of the laminated glass plate at the opposite side of the breaking line and substantially same distance from the breaking line than the location at which the first one or more bars 402 exert the first force. The suctions cups shown in Fig. 4 are used to attached to the lower glass sheet surface to exert the third and fourth forces that have opposite direction than the first and second forces and are applied at a larger distance from the breaking line than the first and second forces, respectively. In this way, the laminated glass plate is curves around the breaking line as a result of the first and second forces pushing it upwards while the suction cups exert third and fourth forces that pull from the laminated glass plate downwards such that the laminated glass plate breaks through the breaking line. At the same time, the heating device 306 can heat the plastic film located between the upper and lower glass sheets of the laminated glass plate. Finally, the suctions cups can move parallel to the laminated glass plate and away from the breaking line pull to pull from the two pieces of laminated glass plate in opposite directions thereby separating it into two pieces such that the plastic film can be cut and the laminated glass plated separated into two pieces.

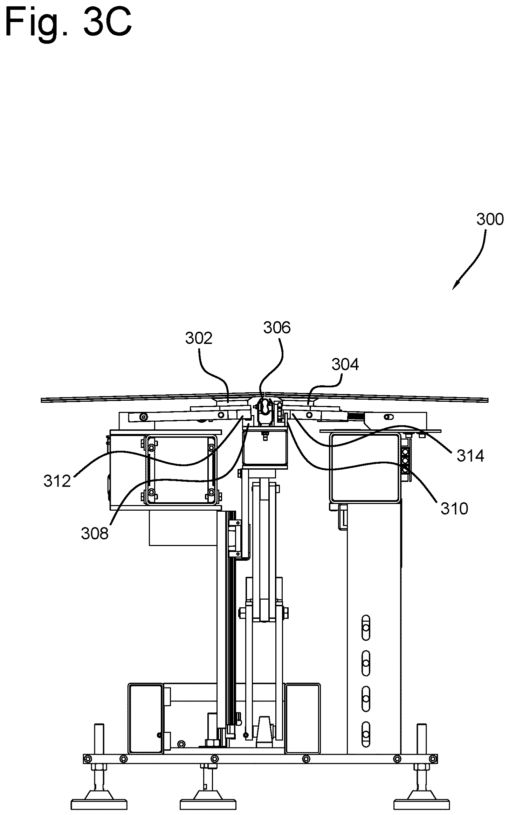

The breaking system 300 of both embodiments shown in Figs. 3A-D and 4 is configured such that a third and a fourth forces are exerted on the laminated glass at the same time and with opposite direction than the first and the second forces. The third force is exerted on the same side of the cutting line than the first force at a third distance from the cutting line that is larger than the first distance. The fourth force is exerted on the same side of the cutting line than the third force at a third distance from the cutting line and the third distance is larger than the first distance. The first, second, third and fourth forces are such to cause the laminated glass plate to curve thereby forcing the upper glass sheet to break through the cutting line, as shown in Fig. 3C.

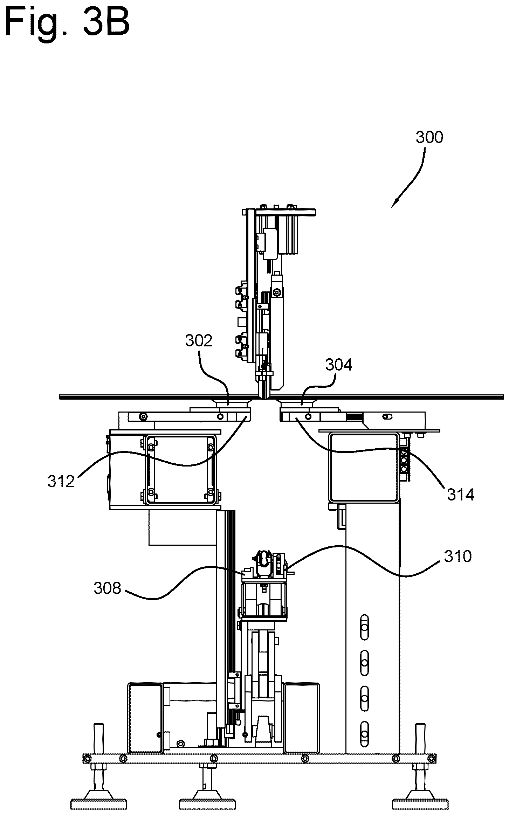

The one or more suction cups of the breaking system 300 shown in Figs. 3A-D are configured to move from an initial position shown in Fig. 3B wherein the one or more suction cups are parallel to the surface of the table and to the laminated glass plate (when placed on the glass processing table) to an inclined position such that the one or more suction cups of the first exertion force means 302 apply the first and the third forces on the laminated glass plate and the one or more suction cups of the second exertion force means 304 apply the second and the fourth forces on the laminated glass plate.

The heating device 312 is configured to move towards the laminated glass plate from a first position shown in Fig. 3B to a second position shown in Fig. 3B. The heating device 312 at the second position is closer to the laminated glass plate and between the one or more suction cups of the first exertion force means 302 and the one or more suction cups of the second exertion force means 304 such that the heating device can heat the move from plastic film of the laminated glass plate and at the same time causes the one or more suction cups of the first exertion force means 302 and the one or more suction cups of the second exertion force means 304 to move from the initial position shown in Fig. 3B to the inclined position shown in Fig. 3C such that the first, second, third and fourth forces are applied as follows. The structure of the heating device 312 comprises a recess 308 on one side of the heating device 312 and a protuberance 310 on the opposite side of the heating device 312. When the heating device 304 moves towards the laminated glass plate to heat the plastic film, the recess 308 fits on the end part 312 of the arm that supports the one or more suction cups of the first exertion force means 302 such that the arm is pushed towards the laminated glass plate and tilts thereby causing the one or more suction cups on the arm that are attached to the lower glass sheet to move from the initial position to the inclined position such that said one or more suction cups exert the first force on the first location pushing the laminated glass plate and the third force at the third location that holds the laminated glass plate. The first force will be exerted by the part of the inclined suction cup that is closer to the surface of the lower glass sheet (it will push the laminated glass plate upwards) while the third force will be exerted by the part of the inclined suction cup that is farer away from the surface of the lower glass sheet (as the suction cup is attached to the lower glass sheet, it will pull from the laminated glass plate downwards). In a similar way, the arm supporting the one or more suction cups of the second exertion means 304 comprise a slit 314 such that, when the heating device moves towards the laminated glass panel, the protuberance 310 on the structure of the heating device 306 fits on the slit 314 and the arm of the second exertion force means 304 is also pushed towards the laminated glass plate and tilts thereby causing the one or more suction cups on the arm that are attached to the lower glass sheet to move from the initial position to the inclined position such that said one or more suction cups exert the second force on the second location pushing the laminated glass plate and the fourth force at the fourth location that holds the laminated glass plate. The second force will be exerted by the part of the inclined suction cup that is closer to the surface of the lower glass sheet (it will push the laminated glass plate upwards) while the fourth force will be exerted by the part of the inclined suction cup that is farer away from the surface of the lower glass sheet (as the suction cup is attached to the lower glass sheet, it will pull from the laminated glass plate downwards). In this way, the laminated glass plate bends as shown in Fig. 3C and this bending breaks the upper glass sheet. The breaking of the upper glass sheet can happen, in this way, at the same time than the heating device is heating the plastic film.

The processing table shown in Figs. 3A-D further comprises a separating system according to an embodiment of the invention that will be described now. However, the breaking system described in relation to Figs. 3A-D and Fig. 4 may comprise any other known separating system to separate the laminated glass plate into two pieces once both upper and lower glass sheets have been broken. In the same way, the separating system that will be described now could be could be combined in a glass processing table with any other breaking system instead of the breaking system 300.

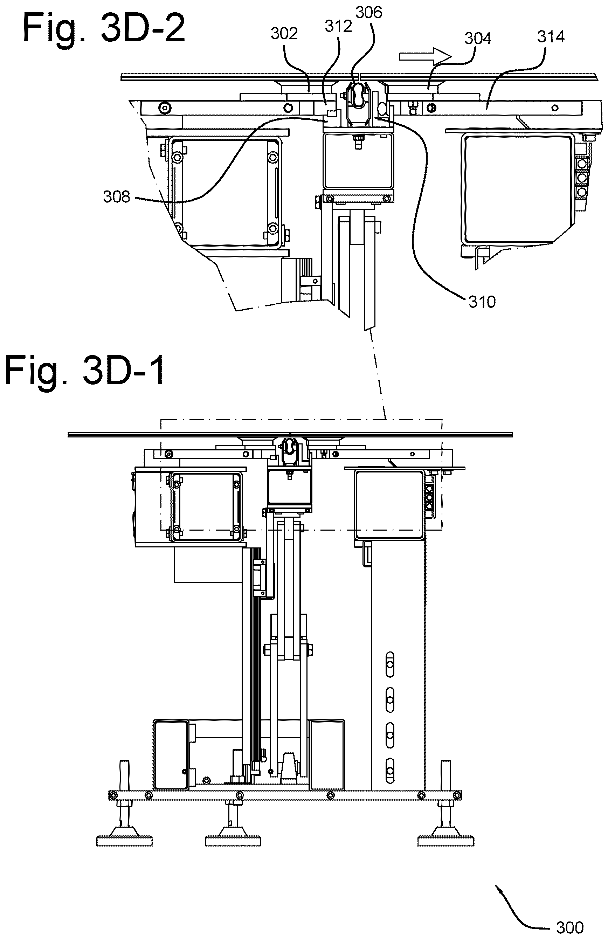

Figs. 3A-D and Fig. 4 show that, after breaking the upper glass sheet and heating the plastic film as described with respect to Fig. 3C, the heating device has move a bit farer from the laminated glass plate such that the respective arms of the first and second exertion means tilt back thereby moving the one or more respective suction cups to the initial position such that the one or more suction cups of the second exertion force means 304 can pull from the laminated glass plate in the direction indicated by the arrow in Fig. 3D while the one or more suction cups of the second exertion force means 304 hold the laminated glass plate at the other side of the cutting line such the two pieces at both sides separate from each other thereby allowing that the upper processing tool can introduce a cutting device thereby and cut the plastic film thereby dividing the laminated glass plate into two pieces. In this way, the separating system comprises two lines of suction cups for holding the laminated glass plate while applying a separating force from both lines of the suction cups and the heating system for heating the plastic film to allow the separating force transmitted to the laminated glass plate by the suction cups to stretch the heated plastic film so that a blade can be inserted and cut it, characterized in that the force transmission system uses the structure supporting the heating device 306 to exert the separating forces between one side and the other. In this way, the separating system for separating laminated glass plates shown in Figs. 3A-D and Fig. 4 comprises the heating device 306, generating force means, first pulling element and second pulling element wherein the first pulling element is arranged facing the second pulling element and the generating force means are arranged to generate a separating force and a structure supporting the heating device is arranged to transmit the separating force between the first and the second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces. The structure supporting the heating device 306 is arranged to contact the first and/or the second pulling elements 302 and 304 to transmit the separating force such that the first and second pulling elements 302 and 304 can exert the first and second pulling forces at the same time as the heating device 306 heats a film of the laminated glass plate. The separating generating force means comprises a swelling hose 502 arranged to generate the separating force and the structure supporting the heating device 412 is arranged to contact the first and/or the second pulling elements 302 and 304 such that the laminated glass plate can be separated a distance which is less than a predetermined distance. The heating device 306 is configured to move from a first position to a second position wherein, when the heating device 306 is at the second position, the heating device 306 is closer to the laminated glass plate than when the heating device is at the first position, and wherein the movement of the heating device 306 from the first position to the second position causes the first and second pulling elements 302 and 304 to move towards and grip the laminated glass plate and the movement of the heating device 306 from the second position to the first position causes the first and second pulling elements 302 and 304 to move away from and release the laminated glass plate. The system shown in Figs. 3A-D and 4 allows a simple overall machine structure since the force transmission is made directly between one side and the other instead of using long structures from one side to the other that tend to deform under the action of the exerted force.

Fig. 4 shows two parting bars symmetrically placed on both sides of the heating lamp that exert the parting force while the suction cups exert the counterforce to hold the laminated glass plate.

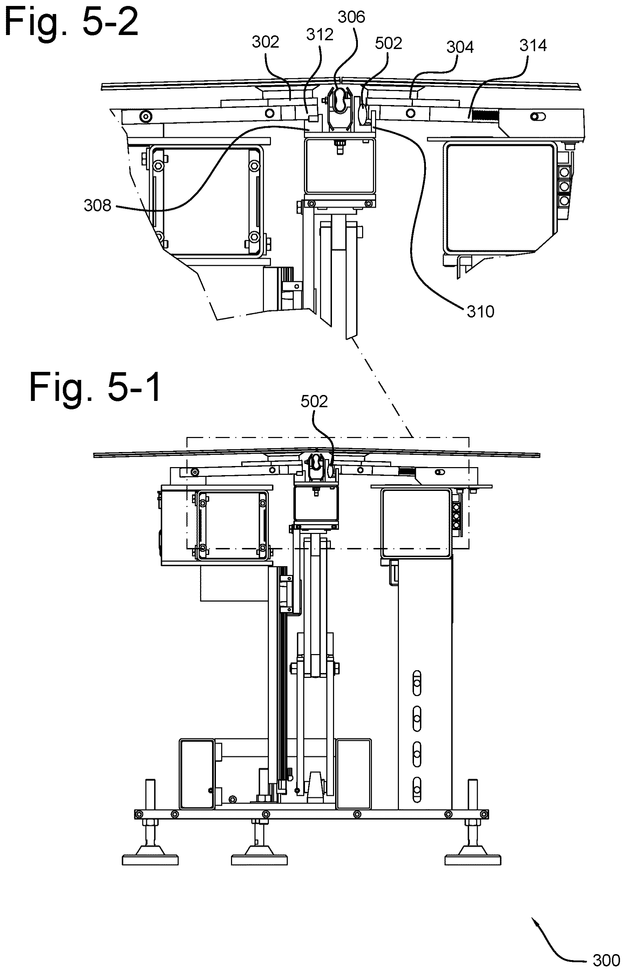

Fig. 5 shows further details of the swelling hose 502 capable of pushing the suction cups sideways as it swells. In this example the pushing element is located in the central structure, but it could also be located on one side or the other.

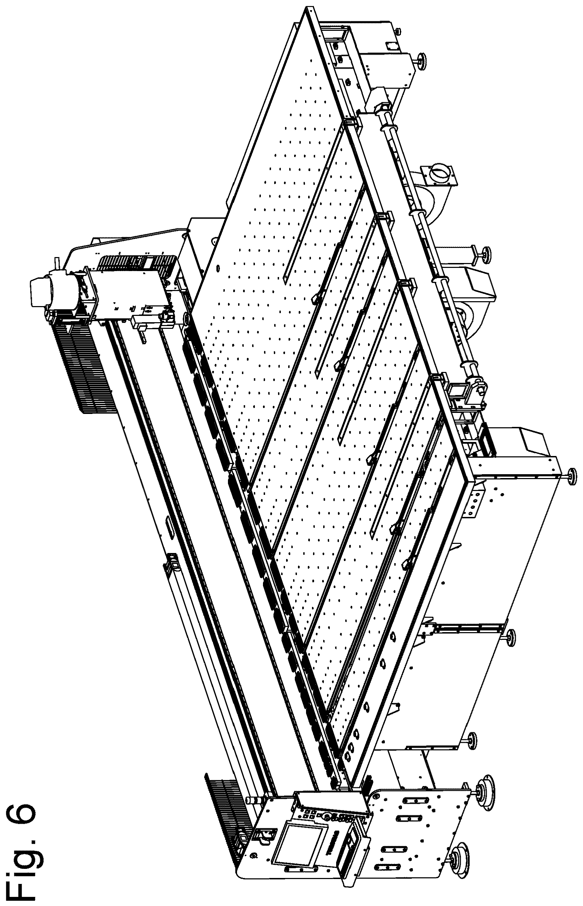

Fig. 6 show a schematic drawing of a complete glass breaking and separating system comprising two subsystems as described in Figs. 3A-D and Figs. 4 and 5 respectively.

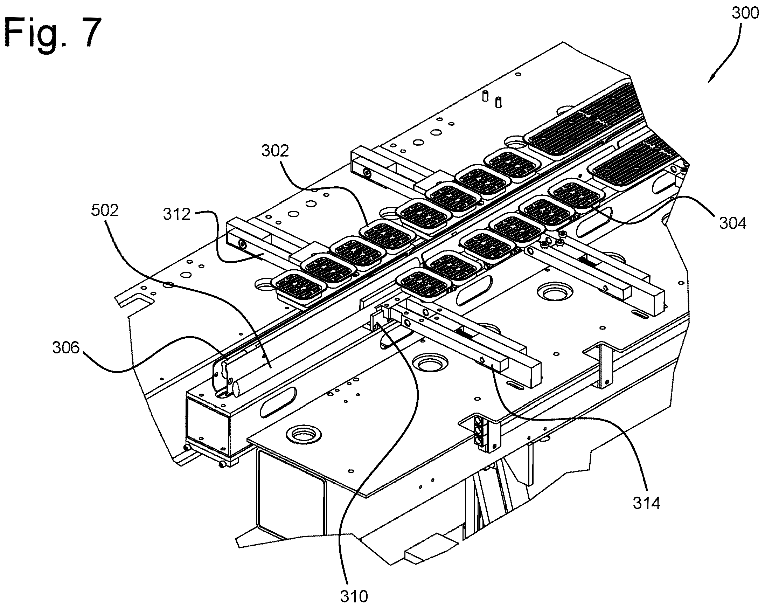

In Fig. 7 it can be seen how the structure supporting the heating lamp behaves as a common element that is used both in the separating system to transmit the stresses between the two suction cup sides and to locate the heating lamp and in the breaking system to exert the force that causes the suction cups to tilt.

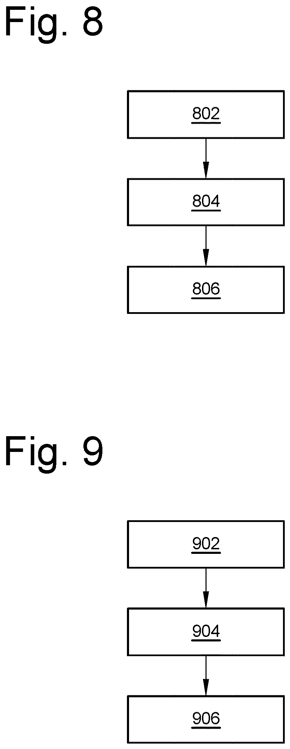

Fig. 8 shows a flowchart of a method for breaking a laminated glass plate. In step 802 of the method of Fig. 8, a cutting line is scored on the surface of the laminated glass plate. The laminated glass plate will be separated into two pieces defined by the scored cutting line. In step 804, the first exertion force means 302 apply a first force on a first location of the surface of the laminated glass plate, the second exertion force means 304 apply a second force on a second location of the surface of the laminated glass plate, while a third and a fourth forces with opposite direction than the first and the second forces are also applied on the laminated glass plate, wherein the first, second, third and fourth forces are such to cause the laminated glass plate to curve thereby forcing the laminated glass to break through the cutting line. In step 806, a heating device 306 heats a plastic film of the laminated glass plate while the first, second, third and fourth forces, are applied. In this sense, although steps 804 and 806 are represented as separated steps, they could be combined in one step such that both steps are performed simultaneously. The first location is at a first distance from the cutting line on the surface of the laminated glass plate, the second location is at a second distance from the cutting line, the first location is on one side of the cutting line, the second location is on the other side of the cutting line, the first distance and the second distance are such to allow placing the heating device 306 between the first and the second exertion force means 304, the third force is exerted on the one side at a third distance from the cutting line larger than the first distance, and the fourth force is exerted on the other side at a fourth distance from the cutting line larger than the second distance

Fig. 9 shows a flowchart of a method for separating a glass laminated plate. Step 902 of the method of Fig. 9 comprises generating, by generating force means, a separating force. Step 904 comprises transmitting, by a structure supporting a heating device 306, the generated force between a first and second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces, wherein the first pulling element is arranged facing the second pulling element. Step 906 comprises separating the laminated glass plate into two pieces.

Thus, the invention has been described by reference to the embodiments discussed above. It will be recognized that these embodiments are susceptible to various modifications and alternative forms well known to those of skill in the art without departing from the scope of the invention. Accordingly, although specific embodiments have been described, these are examples only and are not limiting upon the scope of the invention.

The invention is further defined by the following clauses:
1. A breaking system for breaking a laminated glass plate, the breaking system comprising first exertion force means (302) and second exertion force means (304) wherein the first exertion force means (302) are configured to apply a first force on a first location of a surface of the laminated glass plate and the second exertion force means (304) are configured to apply a second force on a second location of the surface of the laminated glass plate wherein the first location is at a first distance from a cutting line on the surface of the laminated glass plate and the second location is at a second distance from the cutting line, wherein the first location is on one side of the cutting line and the second location is on the other side of the cutting line, wherein the first distance and the second distance are such to allow placing a heating device (306) between the first and the second exertion force means (304), and wherein the breaking system is configured such that a third and a fourth forces are exerted on the laminated glass at the same time and with opposite direction than the first and the second forces, wherein the third force is exerted on the one side at a third distance from the cutting line larger than the first distance, and the fourth force is exerted on the other side at a fourth distance from the cutting line larger than the second distance and the first, second, third and fourth forces are such to cause the laminated glass plate to curve thereby forcing the laminated glass to break through the cutting line.
2. The breaking system according to clause 1 wherein the first exertion force means (302) and/or the second exertion force means (304) comprise one or more bars.
3. The breaking system according to clause 1 wherein the first exertion force means (302) and/or the second exertion force means (304) comprise one or more suction cups.
4. The breaking system according to clause 3 wherein the one or more suction cups are configured to move from an initial position to an inclined position such that the first exertion force means (302) apply the first and the third forces on the laminated glass plate and/or the second exertion force means (304) apply the second and the fourth forces on the laminated glass plate.
5. The breaking system according to any of the preceding clauses wherein the first distance is substantially equal to the second distance.
6. The breaking system according to any of the preceding clauses further comprising the heating device (306) which is configured to move from a first position to a second position wherein, when the heating device (306) is at the second position, the heating device (306) is closer to the laminated glass plate than when the heating device (306) is at the first position and wherein the movement of the heating device (306) from the first position to the second position produces the first and second forces.
7. A separating system for separating laminated glass plates comprising a heating device (306), generating force means, first pulling element and second pulling element wherein the first pulling element is arranged facing the second pulling element and the generating force means are arranged to generate a separating force and a structure supporting the heating device (306) is arranged to transmit the separating force between the first and the second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces.
8. The separating system according to clause 7 wherein the structure supporting the heating device (306) is arranged to contact the first and/or the second pulling elements to transmit the separating force such that the first and second pulling elements can exert the first and second pulling forces at the same time as the heating device (306) heats a film of the laminated glass plate.
9. The separating system according to any of clauses 7 or 8 wherein the generating force means comprises a swelling hose (502) arranged to generate the separating force.
10. The separating system according to clause 8 wherein the structure supporting the heating device (306) is arranged to contact the first and/or the second pulling elements such that the laminated glass plate can be separated a distance which is less than a predetermined distance.
11. The separating system according to clause 7 wherein the heating device (306) is configured to move from a first position to a second position wherein, when the heating device (306) is at the second position, the heating device (306) is closer to the laminated glass plate than when the heating device (306) is at the first position, and wherein the movement of the heating device (306) from the first position to the second position causes the first and second pulling elements to move towards and grip the laminated glass plate and the movement of the heating device (306) from the second position to the first position causes the first and second pulling elements to move away from and release the laminated glass plate.
12. A system for cutting and separating pieces of laminated glass comprising the breaking system according to claims 1 and the separating system according to claim 7 further comprising suction cups used by the first and the second pulling elements to pull the laminated glass plate for separation and also used by the breaking system to generate any of the first, second third and fourth forces to break the glass.
13. A table for processing laminated glass plates comprising the breaking system according to any of clauses 1-7 and/or the separating system according to any of clauses 8-11.
14. A method for breaking a laminated glass plate, the method comprising:
   scoring (802) a cutting line on the laminated glass plate; and
   applying (804), by first exertion force means (302), a first force on a first location of a surface of the laminated glass plate, a second force, by second exertion force means (304), on a second location of the surface of the laminated glass plate, and a third and a fourth forces with opposite direction than the first and the second forces, wherein the first, second, third and fourth forces are such to cause the laminated glass plate to curve thereby forcing the laminated glass to break through the cutting line; and
      heating (806), by a heating device (306) and while applying the first, second, third and fourth forces, a film of the laminated glass plate;
      wherein the first location is at a first distance from the cutting line on the surface of the laminated glass plate, the second location is at a second distance from the cutting line, the first location is on one side of the cutting line, the second location is on the other side of the cutting line, the first distance and the second distance are such to allow placing the heating device (306) between the first and the second exertion force means (304), the third force is exerted on the one side at a third distance from the cutting line larger than the first distance, and the fourth force is exerted on the other side at a fourth distance from the cutting line larger than the second distance.
15. A method for separating a glass laminated plate, the method comprising:
   generating, by generating force means, a separating force that a structure supporting a heating device (306) is arranged to transmit between a first and second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces, wherein the first pulling element is arranged facing the second pulling element.

## Claims

1. A separating system for separating laminated glass plates comprising a heating device (306), generating force means, first pulling element and second pulling element wherein the first pulling element is arranged facing the second pulling element and the generating force means are arranged to generate a separating force and a structure supporting the heating device (306) is arranged to transmit the separating force between the first and the second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces.

2. The separating system according to claim 1 wherein the structure supporting the heating device (306) is arranged to contact the first and/or the second pulling elements to transmit the separating force such that the first and second pulling elements can exert the first and second pulling forces at the same time as the heating device (306) heats a film of the laminated glass plate.

3. The separating system according to any of claims 1 or 2 wherein the generating force means comprises a swelling hose (502) arranged to generate the separating force.

4. The separating system according to claim 2 wherein the structure supporting the heating device (306) is arranged to contact the first and/or the second pulling elements such that the laminated glass plate can be separated a distance which is less than a predetermined distance.

5. The separating system according to claim 1 wherein the heating device (306) is configured to move from a first position to a second position wherein, when the heating device (306) is at the second position, the heating device (306) is closer to the laminated glass plate than when the heating device (306) is at the first position, and wherein the movement of the heating device (306) from the first position to the second position causes the first and second pulling elements to move towards and grip the laminated glass plate and the movement of the heating device (306) from the second position to the first position causes the first and second pulling elements to move away from and release the laminated glass plate.

6. A table for processing laminated glass plates comprising the separating system according to any of claims 1-5.

7. A method for separating a glass laminated plate, the method comprising:
generating, by generating force means, a separating force that a structure supporting a heating device (306) is arranged to transmit between a first and second pulling elements such that, by holding the first pulling element against the second pulling element through the structure, the first and the second pulling elements can exert a first pulling and a second pulling force respectively at each side of a cutting line of a laminated glass plate such that the laminated glass plate can be separated through the cutting line into two pieces, wherein the first pulling element is arranged facing the second pulling element.
